# FASCICULE DE BREVET EUROPEEN

(11) **EP 0 586 279 B1**
(45) Date de publication et mention de la délivrance du brevet: **02.10.1996**
(21) Numéro de dépôt: 93402076.9
(22) Date de dépôt: 20.08.1993
(51) Int. Cl.: B60Q 1/00

(54) **Plaque frontale monobloc pour véhicule automobile**
Einstückige Frontplatte für Kraftfahrzeuge
One-piece face plate for automotive vehicle

(30) Priorité: 04.09.1992 FR 9210552
(43) Date de publication de la demande: 09.03.1994
(73) Titulaire: AUTOMOBILES PEUGEOT, 75116 Paris (FR); AUTOMOBILES CITROEN, 92200 Neuilly sur Seine (FR)
(72) Inventeur: Jamilloux, Olivier, F-78540 Vernouillet (FR)
(74) Mandataire: Seytre, Françoise

(56) Documents cités:
- EP-A- 0 158 328
- FR-A- 1 119 350
- FR-A- 2 629 770
- FR-A- 2 630 077

## Description

L'invention concerne la face avant des véhicules automobiles et, plus particulièrement, une plaque frontale monobloc constituant à la fois la calandre et la glace frontale des projecteurs comme définie dans le préambule de la revendication 1. Un tel dispositif est connu, par exemple, dans le document FR-A-2 630 077.

Actuellement, les projecteurs des véhicules sont placés entre le capot et le pare-chocs et séparés par une pièce métallique formant la calandre. Pour des raisons esthétiques et de réglage du faisceau lumineux, il est nécessaire que l'affleurement de ces différents éléments soit parfait, ce qui, en raison des dispersions de forme et de montage est difficile à réaliser. On a donc recours à des dispositifs de réglage de jeu associés aux fixations des éléments, particulièrement des projecteurs, sur la structure. Ces dispositifs augmentent, bien entendu, à la fois le coût et le temps de montage.

Pour remédier à ces inconvénients, l'invention propose une plaque frontale en matière plastique monobloc, s'étendant entre les deux ailes d'un véhicule et comportant au moins une surface transparente à chacune de ses extrémités, au droit des projecteurs, ainsi que des languettes et/ou cloisons de fixation desdits projecteurs sur la plaque, les surfaces transparentes étant bordées, à la périphérie de leur face interne, par une rainure en forme de gouttière recevant un joint d'étanchéité serré entre ladite face interne et le projecteur.

Ainsi les projecteurs sont montés, par l'arrière, sur la plaque frontale et constituent avec celle-ci un sous-ensemble susceptible d'être pré-assemblé et dont l'aspect extérieur n'est conditionné que par celui de la plaque monobloc, le montage des projecteurs étant invisible.

Selon d'autres caractéristiques de l'invention :
- Chaque projecteur comporte des pattes élastiques coopérant par encliquetage avec des ouvertures formées dans les languettes et/ou cloisons de la plaque.
- Les languettes et/ou cloisons de la plaque portent des moyens de fixation de ladite plaque sur la structure du véhicule.
- La paroi interne des surfaces transparentes comporte un profil apte à permettre une trajectoire optimale de la lumière.

La plaque comporte au moins une fente médiane pour la ventilation du compartiment moteur.

L'invention apparaîtra à la lecture de la description détaillée qui va suivre, pour la compréhension de laquelle on se reportera aux dessins annexés, dans lesquels :
- la figure 1 est une vue en perspective de la plaque frontale et des projecteurs assemblés,
- la figure 2 est une coupe selon AA de la figure 1,
- la figure 3 est une coupe selon BB de la figure 1,
- la figure 4 est une coupe partielle, selon AA de la figure 1, d'une variante de réalisation.

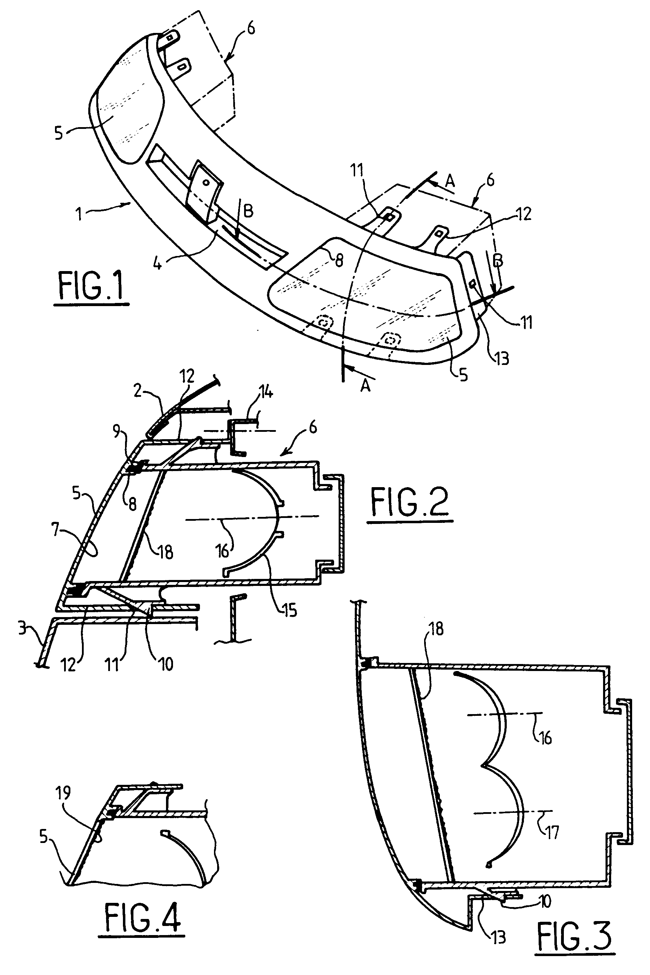

Sur la figure 1, on voit une face avant de véhicule automobile formée d'une plaque 1 incurvée sur les côtés pour se raccorder au profil des ailes. Cette plaque est normalement disposée entre le capot 2 et le pare-chocs 3 (figure 2), elle comporte, en partie centrale, une ou plusieurs fentes 4 de ventilation du compartiment moteur. De part et d'autre de ces fentes, qui occupent donc la partie calandre de la plaque, on trouve une surface 5 transparente traitée de manière à constituer une glace frontale du projecteur 6 monté à l'arrière.

La plaque 1 est réalisée en matière plastique dans laquelle les surfaces transparentes sont obtenues, soit par traitement de la matière employée, soit par inclusion, au moulage de la plaque, d'une matière plastique appropriée. La texture et la couleur de celle-ci seront choisies, par exemple, en harmonie avec celle de la carrosserie du véhicule.

La face interne 7 de la glace frontale 5 est bordée par une rainure 8, en forme de gouttière, destinée à recevoir un joint d'étanchéité 9 contre lequel est appliqué le projecteur 6. Celui-ci est maintenu dans la plaque au moyen de pattes élastiques 10 encliquetées dans les ouvertures 11 formées dans des languettes 12 et/ou de cloisons 13 venues de forme avec la plaque 1.

Ces languettes 12 et/ou cloisons 13 permettent également de fixer ladite plaque sur la structure 14, par exemple, par vissage. Bien entendu, cette fixation peut être assurée par des languettes et/ou cloisons différentes, en totalité ou en partie, de celles qui servent à fixer les projecteurs.

On voit que l'on a ainsi créé un sous-ensemble pouvant être facilement pré-monté et transporté jusqu'à la ligne d'assemblage du véhicule, pour y être fixé sur la structure. 11 n'est plus nécessaire de fixer les projecteurs sur cette structure, ce qui facilite le positionnement par rapport aux autres éléments de la carrosserie. En outre, il n'est plus nécessaire de régler leur position par rapport à ces éléments, puisque c'est la plaque monobloc seule qui affleure à eux.

Comme on le voit sur la figure 1, chaque projecteur comporte devant son réflecteur 15, face à la source lumineuse (représentée par les axes 16 et 17, figures 2 et 3), un écran 18 dont la surface présente, comme cela est connu, un profil approprié, par exemple prismatique, pour permettre une trajectoire optimale de la lumière.

En variante, ainsi que cela est représenté sur la figure 4, ce profil peut être directement réalisé sur la paroi interne 19 de la surface transparente formant la glace frontale 5.

Bien entendu, cette surface transparente peut être incolore ou de toute couleur imposée par la nature et la fonction de la source lumineuse dont elle constitue la glace frontale.

On précise encore que le projecteur peut, comme cela est connu, comporter une ou plusieurs sources lumineuses. De même la plaque peut comporter plus de deux zones transparentes conformes à l'invention, en fonction du nombre de projecteurs et/ou de sources lumineuses associés.

## Revendications

1. Plaque frontale en matière plastique monobloc (1) s'étendant entre les deux ailes d'un véhicule automobile,
caractérisée en ce qu'elle comporte au moins une surface transparente (5) à chacune de ses extrémités, au droit des projecteurs (6), ainsi que des languettes (12) et/ou cloisons (13) de fixation desdits projecteurs sur la plaque (1), les surfaces transparentes étant bordées, à la périphérie de leur face interne (7), par une rainure (8) en forme de gouttière recevant un joint d'étanchéité (9) serré entre ladite face interne et le projecteur.

2. Plaque frontale selon la revendication 1,
caractérisée en ce que chaque projecteur (6) comporte des pattes élastiques (10) coopérant par encliquetage avec des ouvertures (11) formées dans les languettes (12) ou cloisons (13) de la plaque.

3. Plaque frontale selon la revendication 1 ou 2,
caractérisée en ce que les languettes (12) ou cloisons (13) de la plaque portent des moyens de fixation de ladite plaque sur la structure (14) du véhicule.

4. Plaque frontale selon l'une des revendications précédentes,
caractérisée en ce que la paroi interne (19) des surfaces transparentes (5) comporte un profil apte à permettre une trajectoire optimale de la lumière.

5. Plaque frontale selon l'une des revendications précédentes,
caractérisée en ce que la plaque (1) comporte au moins une fente médiane (4) pour la ventilation du compartiment moteur.

## Claims

1. A front plate made of plastic material in a single piece (1) extending between the two wings of a motor vehicle,
characterised in that it includes at least one transparent surface (5) at each of its ends, directly in front of the headlights (6), together with tongues (12) and/or walls (13) for fastening said headlights to the plate (1), the transparent surfaces being bordered, at the periphery of their inner face (7), by a groove (8) in the form of a gutter receiving a sealing strip (9) held tightly between said inner face and the headlight.

2. A front plate according to Claim 1,
characterised in that each headlight (6) includes resilient tabs (10) cooperating by clicking into openings (11) formed in the tongues (12) or walls (13) of the plate.

3. A front plate according to Claim 1 or 2,
characterised in that the tongues (12) or walls (13) of the plate carry means for fastening said plate to the structure (14) of the vehicle.

4. A front plate according to one of the preceding claims,
characterised in that the inner wall (19) of the transparent surfaces (5) have a profile suitable for allowing an optimal trajectory for the light.

5. A front plate according to one of the preceding claims,
characterised in that the plate (1) includes at least one median slot (4) for the ventilation of the engine compartment.

## Patentansprüche

1. Einstückige Kunststoff-Frontplatte (1), die sich zwischen den beiden Kotflügeln eines Kraftfahrzeugs erstreckt,
dadurch **gekennzeichnet**, daß sie mindestens eine transparente Fläche (5) an jedem ihrer Enden in Ausrichtung auf die Scheinwerfer (6) sowie Zungen (12) und/oder Wände (13) zur Befestigung der genannten Scheinwerfer auf der Platte (1) aufweist, wobei die transparenten Oberflächen am Umfang ihrer Innenfläche (7) durch eine dachrinnenförmige Rille (8) umgrenzt sind, die eine Dichtung (9) aufnimmt, die zwischen der genannten Innenfläche und dem Scheinwerfer eingeklemmt ist.

2. Frontplatte nach Anspruch 1,
dadurch **gekennzeichnet**, daß jeder Scheinwerfer (6) elastische Klauen (10) aufweist, die durch Verrastung mit Öffnungen (11) zusammenwirken, die in den Zungen (12) oder Wänden (13) der Platte ausgebildet sind.

3. Frontplatte nach Anspruch 1 oder 2,
dadurch **gekennzeichnet**, daß die Zungen (12) oder Wände (13) der Platte Mittel zur Befestigungs der genannten Platte am Aufbau (14) des Fahrzeugs tragen.

4. Frontplatte nach einem der vorangehenden Ansprüche,
dadurch **gekennzeichnet**, daß die Innenwand (19) der transparenten Flächen (5) ein Profil aufweist, das dazu eingerichtet ist, einen optimalen Weg des Lichtes zu gestatten.

5. Frontplatte nach einem der vorangehenden Ansprüche,
dadurch **gekennzeichnet**, daß die Platte (1) mindestens einen mittleren Schlitz (7) zur Belüftung des Motorabteils aufweist.
